# EUROPEAN PATENT APPLICATION

(11) **EP 3 835 234 A1**
(43) Date of publication of application: **16.06.2021**
(21) Application number: 19215238.7
(22) Date of filing: 11.12.2019
(51) Int. Cl.: B65D 88/00, B65D 90/00, E04B 1/00, F16J 15/02, E06B 3/62

(54) **A SEAL FOR AN AIRTIGHT CONNECTION OF MODULAR UNITS AND A METHOD FOR INSTALLATION OF MODULAR UNITS INTO A BUILDING USING THE SAID SEAL**

(71) Applicant: REM d.o.o., 8210 Trebnje (SI)
(72) Inventor: Mocnik, David, 9244 Sveti Jurij ob Scavnici (SI); Hocevar, Marko, 8210 Trebnje (SI); Lindic, Vanja, 8295 Trzisce (SI); Mozina, Matej, 1290 Grosuplje (SI); Kastelic, Igor, 1290 Grosuplje (SI)
(74) Representative: Patentni Biro AF d.o.o.

(57) **Abstract**

The present invention belongs to the field of construction and modular units for low-energy modular buildings, more precisely to the field of sealing systems for ensuring airtight connections between modular units. The invention relates to an improved seal for an airtight connection between modular units and modular units joined with the said seal and a method for installation of modular units into building using the said seal.

The essence of the invention is that the connection for installation between modular units is in that a seal is inserted between profiles of two modular units to be joined, wherein the seal has a cross-section shaped as a lying letter L with a curved protrusion on the side opposite the short part of the letter L, and wherein at least one, preferably two additional shorter protrusions are provided in the longer part of the lying letter L. The shorter protrusions are on the same side as the longer protrusion. When the seal is installed, an airtight connection between the units is created. The seal is preferably made of EPDM material.

## Description

### Field of the invention

The present invention belongs to the field of construction and modular units for low-energy modular buildings, more precisely to the field of sealing systems for ensuring airtight connections between modular units. The invention relates to an improved seal for an airtight connection between modular units and modular units joined with the said seal as well as a method for installation of modular units into a building using the said seal.

### Background of the invention and the technical problem

Modular buildings are objects composed of repeated prefabricated sections called modules. Modules are produced away from the building site, while they are installed into a building directly on the building site. They can be placed either side-by-side, end-to-end or stacked, which allows a variety of combinations leading to buildings of various forms and styles. The modules are joined together using special connections, which connect the individual modules into an overall building structure.

Such buildings are usually low-energy houses, meaning that they have low energy consumption. Traditional heating and/or cooling systems are absent or their use is secondary. Reduction of the house's energy consumption also depends on the connections between the said modules.

Airtightness of a building is one of the most important aspects of energy efficiency. By ensuring airtight connections between modules escape of heat/warmth through outer elements of the building is controlled, thus preventing entry of water steam into the constructions. Presence of steam can cause condensation and can consequently damage the construction. Hence, it is required that presence of steam is avoided or at least prevented.

The technical problem, which is solved by the present invention, is to provide an improved seal for modular units that will ensure as high airtightness as possible. An additional aim of the invention is to provide such seal, which will simplify and speed up installation of modules into modular buildings.

### State of the art

Some of the known solutions are based on inserting a steam obstacle or obstruction along the inner side, while the joints are glued between foils. These solutions perform satisfactorily, but consume a lot of installation time and have a higher probability of mistakes and malfunctions.

Patent application WO2017122071 discloses a cladding for a modular frame structure, of the type used for assembling complex frames of buildings by means of interconnecting several module frames. The cladding comprises: respective inner panels the edges thereof are wholly sustained inside frame beams, comprising the overlapping of a pair of layers: a first bearing layer facing outwards, and a second insulating thermal layer facing inwards; outer panels in contact with said inner panels comprising a box-like reinforcement, with a filler selected in relation to the use climatic area, which defines the inner face, having a compensation foil made of compressible material, rested on an inner panel and an outer face having a plurality of fastening pins fixed in the wall of the reinforcement; and a flat element of outer finishing, forming an air gap. This solution relates to connection of outer coverings of modular objects and does not address control of air flow.

Patent application DE3415252 discloses a lightweight building-element system, which conforms to more stringent thermal requirements. The system is provided with joint connection fittings, which can be mutually connected and released in a rapid manner. As a result of its specific design, the building-element system is suitable for erecting buildings having various dimensions and purposes, in particular weekend houses, holiday homes, temporary municipal and service installations, and dwellings. The building elements are provided with cladding ensuring an air gap, through which air can pass, and thus ensure a favourable embodiment in terms of both heat and cold. The load-bearing and/or the load-transferring connection between the individual building elements is ensured by fastening elements which render a special supporting or bracing action of the building elements unnecessary. This solution does not allow the required air exchange rate as defined in the technical problem.

Document CN106480977 describes a passive house assembled by adopting a modular structure. Reinforced bar frameworks are arranged between upright posts, module boards sleeve the upright posts and the corresponding reinforced bar frameworks, a plurality of blocks are arranged on each of top plates and are supported by the reinforced bar frameworks, corresponding integrated windows and corresponding integrated doors are arranged on the module boards, and an air circulating system comprises a circulating pipeline arranged inside the module boards and a ground air constant-temperature exchange device pre-embedded under the ground. The circulating pipeline arranged inside the module boards and the pre-arranged ground air constant-temperature exchange device can perform circular exchange of air inside the house, so that the air quality inside the house and the temperature stability are ensured, and meanwhile, the energy consumption is greatly reduced. Buildings provided with air exchange devices are unnecessarily complicated, while the devices have to be appropriately installed and they also consume place and energy for operation. Hence, for energy efficient buildings such devices are not suitable.

Patent application KR101236592 aimed to provide a junction structure for a steel frame applied to a unit modular housing in order to improve resistance against lateral forces such as a wind load and a support load. The junction structure comprises a fastening bracket, which has plural junction vanes faced on the column and the beam of each steel frame, is installed on a junction among the steel frames applied to the unit modular housing in order to integrally join the steel frames left and right, and up and down. Assembling position for the fastening bracket and the column is determined. The fastening bracket has protruded hooks in order to disperse a lateral load applied to the column of the steel frame. This solution is silent about air exchange and its limitation.

Patent application US4186539 discloses a modular building panel of the interlocking type, such as that disclosed in U.S. Pat. No. 3,742,672, and is provided with a sealing strip formed from an elastomeric material that is carried on at least one component of a longitudinal edge of either the tongue or socket marginal edge portion of the panel. In accordance with this invention, the sealing strip is secured to the structure at the factory as one of the steps in fabrication of a panel either by mechanical clamping techniques or through adhesive bonding and is thus provided with a panel in preassembled relationship when the panel is shipped for installation and assembly. The connections of panels differ from connections of modular building units in their composition and design.

Patent application FR3002253 describes a roof for a modular building, the roof having sealing filling plaster provided for one of set of sections, where plaster is arranged with set of sections and tray so as to ensure sealing of water.

### Description of the solution of the technical problem

The essence of the invention is that the connection for installation between modular units is in that a seal is inserted between profiles of two modular units to be joined, wherein the seal has a cross-section comprising a horizontal part, which is:
- on one end provided with a short vertical part approximately perpendicular to the horizontal part to form an approximate letter L, and
- on the other end provided with a curved protrusion below the horizontal part, and at least one, preferably two shorter protrusions in the middle of the horizontal part, wherein these shorter protrusions are also located below the horizontal part.

When the seal is installed between two modules, an airtight connection between the units is created, as the second module squeezes the seal, especially the curved protrusion is pushed towards the shorter protrusions and the longer part of the letter L. The seal is preferably made of ethylene propylene diene monomer rubber (EPDM rubber) with closed-cell structure. The seal is preferably self-adhesive, so that it is provided with glue on one side to ensure reliable contact with the unit, wherein said glue is provided on the L-shaped part of the cross-section away from the protrusions. Thus, additional glues or mounting accessories and procedures are not needed.

A common modular unit comprises a steel frame, composed of floor and ceiling profiles, corners and pillars. Walls are inserted into the steel frame together with floor and ceiling filling. According to the invention individual modular unit frames are assembled into modular objects, buildings, and houses, so that depending on the type of connection (end-by-end, side-by-side, etc.) relevant parts of frames are joined by the seal according to the invention. The connection is thus made at all places where units are in contact, wherein the first module is provided with the seal, which is preferably self-adhesively glued to a cleaned surface of relevant profiles along the whole length of the connection with the second module. After that, the second module pushed towards the first module to a distance of 5 to 15 mm, preferably 10 mm, from thereby squeezing the seal and completely sealing the space between the two modules, thus preventing uncontrolled air flow. The curved protrusion is pressed towards the shorter protrusions and the horizontal part of the seal's cross-section by the second module.

The method for installation of modular units into building using the seal according to the invention can be used to build any kinds of buildings comprising at least two modular units connected with the said seal.

The invention will be described in further detail based on exemplary embodiments and figures, which show:
- Figure 1a: A possible embodiment of the seal according to the invention
- Figure 1b: Corner seal according to the invention
- Figure 2: A ground plan of the cross-section of the wall of a modular unit with the seal
- Figure 3: A cross-section of the ceiling of a modular unit with the seal
- Figure 4: A cross-section of the floor of a modular unit with the seal
- Figure 5: A modular unit with the seal

The invention is based on the connection of modular units, more precisely their frames, which is provided with the seal that ensures as high airtightness as possible.

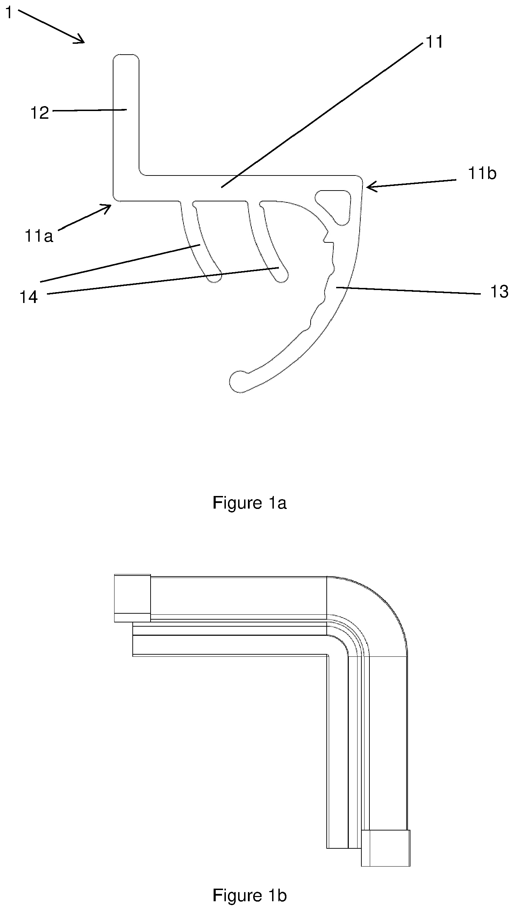

Figure 1a shows a possible embodiment of the seal 1 according to the invention, the seal having a cross section comprising a horizontal part 11, which is:
- on one end 11a provided with a short vertical part 12 approximately perpendicular to the horizontal part 11, and
- on the other end 11b provided with a curved protrusion 13 below the horizontal part 11, and
- at least one, preferably two shorter protrusions 14 in the middle of the horizontal part 11, wherein these shorter protrusions 14 are also located below the horizontal part 11.
   The seal according to the embodiment is made of EPDM. The corner seal is shown in figure 1b and its cross-section is the same as shown in figure 1a.

The preferred method for installation of modular units into building using the said seal comprises the following steps:
a) providing at least two modular units to be connected;
b) preferably cleaning the surfaces of modular unit frames to be connected;
c) attaching the seal to the first module along the entire circumference of the connection with the second module;
d) pushing the second module towards the first module to a distance between 5 and 15 mm, preferably 10 mm, and
e) then the seal deforms and squeezes to ensure an airtight connection with proper connection of the seal from both sides.

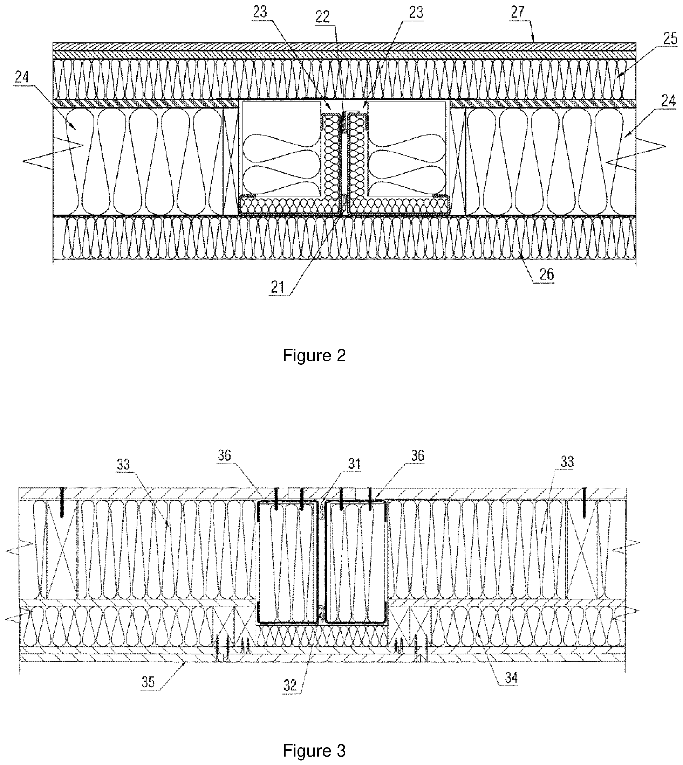

Figures 2 to 5 show possible installations of the seal according to the invention.

Figure 2 shows a ground plan of the cross-section of the wall of a modular unit with an outside EPDM seal 21, an inner EPDM seal 22, installed between two pillars 23 of the wall 24. The wall 24 is covered on one side with an external wall 26 and on the other side with an installation layer 25 and a plasterboard 27.

Figure 3 shows a cross-section of the ceiling of a modular unit with the seal, wherein an outside EPDM seal 31 and an inner EPDM seal 32 are installed between two ceiling profiles 36 of the ceiling 33. The ceiling 33 is covered on one side with an installation layer 34 and a plasterboard 35.

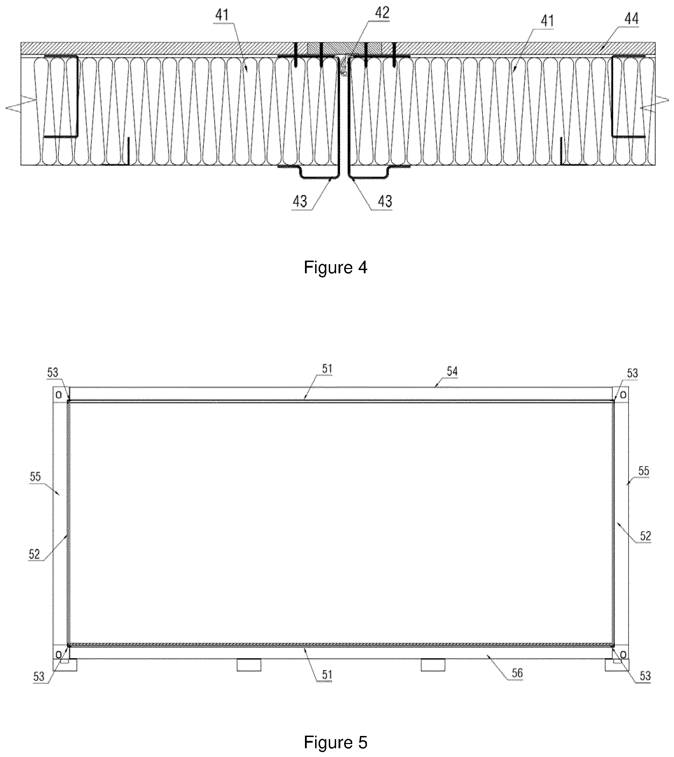

Figure 4 shows a cross-section of the floor 41 of a modular unit with the seal 42, wherein the seal 42 is installed between two floor profiles 43 of the floor 41 covered with a floor board 44.

A modular unit with the seal is shown in Figure 5, wherein the seal is installed around the perimeter of the modular unit, including the corners as shown in figure 1b, which have the same cross-section (figure 1a) as the seal used on straight sides. The floor profile 56 is placed on supports, wherein ceiling profile 54 is supported by pillars 55 installed into the floor profile 56. Corner seals 53 are used on corners, while straight seals 51 and 52 are placed on floor, ceiling and pillar elements.

## Claims

1. A seal (1) for installation of modular units, **characterized in that** the seal (1) has a cross-section comprising a horizontal part (11), which is:
- on one end (11a) provided with a short vertical part (12) approximately perpendicular to the horizontal part (11) to form an approximate letter L, and
- on the other end (11b) provided with a curved protrusion (13) below the horizontal part (11), and
- at least one, preferably two shorter protrusions (14) in the middle of the horizontal part (11), wherein these shorter protrusions (14) are also located below the horizontal part (11).

2. The seal according to claim 1, **characterized in that** the seal is made of ethylene propylene diene monomer rubber (EPDM).

3. The seal according to any preceding claim, **characterized in that** the seal is preferably self-adhesive.

4. The seal according to claim 3, wherein glue is provided on the L-shaped part (11, 12) of the seal away from the protrusions (13, 14).

5. A method for installation of modular units into building using the seal according to any of the preceding claims, the method comprising the following steps:
a) providing at least two modular units to be connected;
b) attaching the seal according to any of the preceding claims to the first module along the entire length circumference of the connection with the second module;
c) pushing the second module towards the first module to a distance between 5 to 15 mm, and
d) then the seal deforms and squeezes the curved protrusion towards the small protrusions to ensure an airtight connection with proper connection of the seal from both sides.

6. The method for installation of modular units into building according to the preceding claims, **characterized in that** the distance between modules is 10 mm.

7. The method for installation of modular units into building according to any claim from 5 to 6, **characterized in that** cleaning of surfaces of modular unit frames is performed prior to attaching the seal.

8. The method for installation of modular units into building according to any claim from 5 to 7, **characterized in that** individual modular units are assembled into modular objects, buildings, and houses, the connection being end-by-end, side-by-side, or any other possible connection type.

9. A building comprising at least two modular units connected with the seal according to any claim from 1 to 4 or made by the method according to any claim from 5 to 8.
